# EUROPÄISCHE PATENTSCHRIFT

(11) **EP 0 851 845 B1**
(45) Veröffentlichungstag und Bekanntmachung des Hinweises auf die Patenterteilung: **30.05.2001**
(21) Anmeldenummer: 96932547.1
(22) Anmeldetag: 17.09.1996
(51) Int. Cl.: C03C 1/00, C03B 19/12

(54) **DÜNNE SiO 2-FOLIEN, VERFAHREN ZU IHRER HERSTELLUNG UND IHRE VERWENDUNG**
THIN SiO 2 FILMS, A PROCESS FOR PRODUCING THEM AND THEIR USE
FILMS MINCES DE SiO 2, PROCEDE DE PRODUCTION DESDITS FILMS ET LEUR UTILISATION

(30) Priorität: 19.09.1995 DE 19534764; 20.09.1995 DE 19534980
(43) Veröffentlichungstag der Anmeldung: 08.07.1998
(73) Patentinhaber: INSTITUT FÜR NEUE MATERIALIEN gemeinnützige GmbH, 66123 Saarbrücken (DE)
(72) Erfinder: SCHMIDT, Helmut, D-66130 Saarbrücken (DE); MENNIG, Martin, D-66287 Quierschied (DE); JONSCHKER, Gerhard, D-66583 Spiesen-Elversberg (DE); SUYAL, Navin, D-66125 Saarbrücken (DE)
(74) Vertreter: Barz, Peter, Dr.
(86) Internationale Anmeldenummer: EP9604069
(87) Internationale Veröffentlichungsnummer: WO9711035

(56) Entgegenhaltungen:
- EP-A- 0 292 179
- EP-A- 0 719 735
- DE-A- 3 142 383
- US-A- 5 049 338
- PATENT ABSTRACTS OF JAPAN vol. 012, no. 191 (C-501), 3.Juni 1988 & JP,A,62 297232 (CENTRAL GLASS CO LTD), 24.Dezember 1987,
- PATENT ABSTRACTS OF JAPAN vol. 015, no. 167 (C-0827), 26.April 1991 & JP,A,03 037138 (SUMITOMO ELECTRIC IND LTD), 18.Februar 1991,

## Beschreibung

Die Erfindung betrifft dünne, rißfreie, vorzugsweise transparente und farblose SiO₂-Folien, ein Verfahren zu ihrer Herstellung nach dem Sol-Gel-Prozeß und ihre Verwendung z.B. als Membranen, Filter, Bestandteile von Laminaten oder Trägermaterialen mit inkorporierten funktionellen Zusatzstoffen.

Glasfolien werden üblicherweise mittels Zieh- oder Extrusionsverfahren aus der Schmelze hergestellt. Diese Verfahren sind von den thermischen Eigenschaften des Glases (Erweichungspunkt, Kistallisationsgeschwindigkeit etc.) abhängig und daher auf bestimmte Glaszusammensetzungen beschränkt. Eine weitere Beschränkung besteht hinsichtlich der Mindestdicke der herstellbaren Glasfolien, wodurch es bisher nicht möglich war, Kieselglasfolien mit einer Dicke unterhalb etwa 250 µm durch Schmelz- und anschließende Formgebungsverfahren herzustellen.

Es ist bekannt, daß durch Sol-Gel-Techniken die Verdichtungstemperatur von glasartigen und/oder keramischen Werkstoffen wesentlich verringert werden kann. Die Herstellung von SiO₂-Folien nach dem Sol-Gel-Prozeß scheiterte jedoch bisher an Problemen bei der Überführung der meist wäßrigalkoholischen Vorstufen (Sole) in den Xerogelkörper durch Lösungsmittelentzug oder Zusatz eines Gelierungsmittels. Beim Trocknen von Solen auf Unterlagen kommt es durch Kapillarkräfte und aufgrund der unterschiedlichen Trocknungsgeschwindigkeit an der Ober- bzw. Unterseite leicht zur Bildung von Rissen. Außerdem lösen sich die Gelfilme aufgrund der bevorzugten Lösungsmittelverdampfung an der Oberfläche beim Trocknen von der Unterlage ab und rollen ein. Es war deshalb kein Verfahren bekannt, nach dem transparente, rißfreie SiO₂-Folien mit größeren Abmessungen durch Gießen und Gelieren von SiO₂-Solen auf einer Unterlage hergestellt werden können.

Überraschenderweise wurde nun gefunden, daß dünne SiO₂-Folien sehr einfach und in praktisch beliebigen Abmessungen (Länge und Breite) in einem Sol-Gel-Verfahren herstellbar sind.

Gegenstand der Erfindung ist ein Verfahren zur Herstellung dünner SiO₂-Folien, das dadurch gekennzeichnet ist, daß man
a) 40 bis 100 Masse-% eines oder mehrerer Silane der allgemeinen Formel (I)

   Rₓ-Si-A₄₋ₓ (I)

   worin die Reste A gleich oder verschieden sind und Hydroxylgruppen oder hydrolytisch abspaltbare Gruppen darstellen, die Reste R gleich oder verschieden sind und hydrolytisch nicht abspaltbare Gruppen darstellen und x den Wert 0, 1, 2 oder 3 hat, wobei bei mindestens 70 Stoffmengen-% der Silane x ≥ 1 ist; gegebenenfalls in Gegenwart von
b) 0 bis 50, vorzugsweise 0 bis 25 Masse-% kolloidalem SiO₂ und/oder
c) 0 bis 10 Masse-% eines organischen Bindemittels
hydrolysiert und kondensiert, das erhaltene viskose Sol zu einer Gelfolie verarbeitet und die Gelfolie wärmebehandelt.

Gegenstand der Erfindung sind ferner auf diese Weise herstellbare SiO₂-Folien und SiO₂-Folien mit einer Dicke von 2,5 bis 250 µm und einer Fläche von mindestens 25 cm², vorzugsweise mindestens 50 cm², besonders bevorzugt mindestens 100 cm².

Die erfindungsgemäßen SiO₂-Folien sind dünn, rißfrei, vorzugsweise transparent und farblos, zeichnen sich durch hohe Flexibilität und minimale Schrumpfung aus.

Einzelheiten des Sol-Gel-Prozesses sind bei C.J. Brinker, G.W. Scherer: "Sol-Gel Science - The Physics and Chemistry of Sol-Gel-Processing", Academic Press, Boston, San Diego, New York, Sydney (1990) und in den DE 1941191, DE 3719339, DE 4020316 und DE 4217432 beschrieben.

Dort sind auch spezielle Beispiele für die im erfindungsgemäßen Verfahren einsetzbaren Silane sowie deren hydrolytisch abspaltbare Reste A und hydrolytisch nicht abspaltbare Reste R angegeben.

Bevorzugte Beispiele für hydrolytisch abspaltbare Gruppen A sind Wasserstoff, Halogen (F, Cl, Br und I, insbesondere Cl und Br), Alkoxy (insbesondere C₁₋₄-Alkoxy, wie z.B. Methoxy, Ethoxy, n-Propoxy, i-Propoxy und Butoxy), Aryloxy (insbesondere C₆₋₁₀-Aryloxy, z.B. Phenoxy), Alkaryloxy (z.B. Benzyloxy), Acyloxy (insbesondere C₁₋₄-Acyloxy, wie z.B. Acetoxy und Propionyloxy) und Alkylcarbonyl (z.B. Acetyl). Ebenfalls geeignete Reste A sind Amingruppen (z.B. Mono- oder Dialkyl-, -aryl- und -aralkylamingruppen mit den oben genannten Alkyl-, Aryl- und Aralkylresten), Amidgruppen (z.B. Benzamido) und Aldoxim- oder Ketoximgruppen.
Zwei oder drei Reste A können zusammen auch eine das Si-Atom komplexierende Gruppierung bilden, wie dies z.B. bei Si-Polyolkomplexen der Fall ist, die sich von Glykol, Glycerin oder Brenzkatechin ableiten.

Die genannten hydrolysierbaren Gruppen A können gegebenenfalls einen oder mehrere übliche Substituenten tragen, z.B. Halogenatome oder Alkoxygruppen.

Die hydrolytisch nicht abspaltbaren Reste R sind vorzugsweise ausgewählt aus Alkyl (insbesondere C₁₋₄-Alkyl, wie z.B. Methyl, Ethyl, Propyl und Butyl), Alkenyl (insbesondere C₂₋₄-Alkenyl, wie z.B. Vinyl, 1-Propenyl, 2-Propenyl und Butenyl), Alkinyl (insbesondere C₂₋₄-Alkinyl, wie Acetylenyl und Propargyl), Aryl (insbesondere C₆₋₁₀-Aryl, wie z.B. Phenyl und Naphthyl) und den entsprechenden Alkaryl- und Arylalkylgruppen. Auch diese Gruppen können gegebenenfalls einen oder mehrere übliche Substituenten, z.B. Halogen-, Alkoxy- oder Epoxidgruppen, aufweisen.

Die oben genannten Alkyl-, Alkenyl- und Alkinylgruppen schließen die entsprechenden cyclischen Reste, wie z.B. Cyclohexyl, ein.

Die erfindungsgemäß verwendeten Silane der allgemeinen Formel (I) können ganz oder teilweise in Form von Vorkondensaten eingesetzt werden, d.h. Verbindungen, die durch teilweise Hydrolyse der Silane der Formel (I), entweder allein oder im Gemisch mit anderen hydrolysierbaren Verbindungen entstanden sind. Derartige, im Reaktionsmedium vorzugsweise lösliche Oligomere können geradkettige oder cyclische niedermolekulare Teilkondensate (Polyorganosiloxane) mit einem Kondensationsgrad von z.B. etwa 2 bis 100, insbesondere etwa 2 bis 6, sein.

Konkrete Beispiele für Silane der allgemeinen Formel (I) sind Verbindungen der folgenden Formeln:
Si(OCH₃)₄, Si(OC₂H₅)₄, Si(O-n- oder i-C₃H₇)₄ Si(OC₄H₉)₄, SiCl₄, HSiCl₃, Si(OOCCH₃)₄, CH₃-SiCl₃, CH₃-Si(OC₂H₅)₃, C₂H₅-SiCl₃, C₂H₅-Si(OC₂H₅)₃, C₃H₇-Si(OCH₃)₃, C₆H₅-Si(OCH₃)₃, C₆H₅-Si(OC₂H₅)₃, (CH₃O)₃-Si-C₃H₆-Cl, (CH₃)₂SiCl₂, (CH₃)₂Si(OCH₃)₂, (CH₃)₂Si- (OC₂H₅)₂, (CH₃)₂Si(OH)₂, (C₆H₅)₂SiCl₂, (C₆H₅)₂Si(OCH₃)₂, (C₆H₅)₂Si(OC₂H₅)₂, (i-C₃H₇)₃SiOH, CH₂=CH-Si(OOCCH₃)₃, CH₂=CH-SiCl₃, CH₂=CH-Si(OCH₃)₃, CH₂=CH-Si(OC₂H₅)₃, CH₂=CH-Si(OC₂H₄OCH₃)₃, CH₂=CH-CH₂-Si(OCH₃)₃, CH₂=CH-CH₂-Si(OC₂H₅)₃, CH₂=CH-CH₂-Si(OOCCH₃)₃, CH₂=C (CH₃)-COO-C₃H₇-Si(OCH₃)₃, CH₂=C(CH₃)-COO-C₃H₇-Si(OC₂H₅)₃,

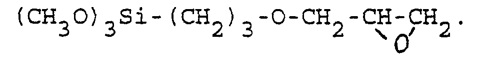

Diese Silane lassen sich nach bekannten Methoden herstellen; vgl. W. Noll, "Chemie und Technologie der Silicone", Verlag Chemie GmbH, Weinheim/Bergstraße (1968).

Die erfindungsgemäßen SiO₂-Folien können z.B. aus reinem Methyltriethoxysilan (MTEOS) oder aus Mischungen von MTEOS und Tetraethoxysilan (TEOS) hergestellt werden. Ein besonders bevorzugtes System umfaßt 90 Stoffmengen-% MTEOS und 10 Stoffmengen-% TEOS.

Zur Verbesserung der Handhabbarkeit und anderer mechanischer Eigenschaften der dünnen SiO₂-Folien wird vorzugsweise kolloidales SiO₂ als zusätzliches Ausgangsmaterial angewandt. Dessen Verwendung erhöht auch die Dichte und das Porenvolumen der Folien. Das kolloidale SiO₂ kann z.B. in Form von Kieselsolen oder nanoskaligen, dispergierbaren Pulvern vorliegen. Bevorzugt ist ein alkoholisches Kieselsol mit Teilchengrößen von ca. 10 nm.

Als weitere Eventualkomponente kann ein organisches Bindemittel angewandt werden, das sich anschließend wieder thermisch aus der Gelfolie entfernen läßt. Geeignete Bindemittel sind z.B. Polyvinylalkohol, Polyvinylacetat, Stärke, Polyethylenglykol und Gummi arabicum.

Die Hydrolyse und Kondensation wird unter Sol-Gel-Bedingungen vorzugsweise in einem alkoholischen Lösungsmittel (z.B. Methanol oder Ethanol) unter basischer Katalyse (z.B. mit Ammoniak) durchgeführt, bis ein viskoses Sol entsteht. Um eine günstige Solpartikel-Morphologie und Sol-Viskosität einzustellen, unterwirft man das Hydrolysat/Kondensat vorzugsweise einem gezielten Alterungsschritt, bei dem die Reaktionsmischung mehrere Stunden bis mehrere Tage auf Temperaturen von 40 bis 120°C erwärmt wird. Besonders bevorzugt ist eine etwa 4tägige Erwärmung auf 80°C. Hierbei entsteht ein Sol mit einer Viskosität von vorzugsweise 5 bis 100 Pas, besonders bevorzugt 20 bis 25 Pas.

Das Sol kann anschließend auf verschiedene Weise zu einer Gelfolie verarbeitet werden, beispielsweise durch Gießen und Gelieren auf einem Substrat oder in einer Form, Filmziehen, Blastechniken oder Auspressen aus einer Schlitzdüse, wobei die Gelierung durch Verdampfen des Lösungsmittels und/oder Zugabe von Gelierungsmitteln (z.B. H₂O, HC1 oder NH₃) erfolgt. Besonders bevorzugt sind das Gießen oder Aufrakeln auf eine nicht-haftende Unterlage, z.B. aus Polystyrol, Polyethylen oder Teflon und Verdampfen des Lösungsmittels. Die Gelierung des Sols kann auch kontinuierlich z.B. auf einer Walze oder einem Transportband erfolgen.

Bei dem besonders bevorzugten System aus 90 Stoffmengen-% MTEOS und 10 Stoffmengen-% TEOS wurde überraschenderweise gefunden, daß dieses bei basischer Katalyse und einer Temperatur von 80°C auch nach einem Zeitraum von 100 h nur unwesentlich kondensiert. Dies widerspricht der herkömmlichen Erfahrung, wonach die Anwesenheit von basischen Katalysatoren die Kondensationsreaktion beschleunigt. Dagegen wird das erfindungsgemäße System praktisch vollständig hydrolysiert, jedoch nicht kondensiert, so daß keine Gelierung erfolgt. Das hat zur Folge, daß beim Eingießen des Sols in eine Form das Lösungsmittel abdampfen kann, ohne daß eine Gelierung erfolgt. Erst wenn das Lösungsmittel nahezu vollständig verdampft ist, setzt eine Gelierung unter Bildung einer Gelfolie ein.

Die erhaltene Gelfolie wird dann getrocknet, vorzugsweise bei Temperaturen von Raumtemperatur bis 100°C unter Normaldruck oder verringertem Druck. Besonders bevorzugte Trocknungsbedingungen sind 3 h bei 20 bis 30°C, gefolgt von 15 h bei 50°C.

Der erhaltene Gelkörper kann gegebenenfalls verschiedenen Vorbehandlungen unterzogen werden. Beispielsweise kann eine Formgebung durch mechanische oder chemische Bearbeitung erfolgen, z.B. Bohren, Schneiden, Anlösen, Ätzen, Strukturieren (Prägen, Ionenbeschuß), Falten oder Biegen.

Um die mechanischen Eigenschaften zu verbessern, kann die Gelfolie gegebenenfalls in funktionelle (reaktive) Lösungsmittel eingebracht oder damit behandelt werden, z.B. mit Wasser, Alkoholen, Aminen, Si-Verbindungen (z.B. TEOS), oder mit reaktiven Gasen behandelt werden, z.B. mit HCl oder NH₃.

Gegebenenfalls kann auch eine Vorbehandlung der Gelfolie durch Corona- oder Plasmaerzeuger erfolgen.

Schließlich erfolgt eine Wärmebehandlung der Gelfolie im Temperaturbereich von 100 bis 1400°C, wobei unterhalb 200°C eine Temperung stattfindet, im Bereich von 200 bis 700°C die organischen Komponenten ausgebrannt werden und oberhalb 700°C eine thermische Verdichtung (Sinterung) erfolgt.

Die Wärmebehandlung kann durch z.B. durch Erhitzen, Bestrahlen mit Infrarot-, Laser- oder Blitzlichtstrahlung (Rapid Thermal Annealing) erfolgen. Hierbei werden Aufheizgeschwindigkeiten von vorzugsweise 40 bis 50°C/h. angewandt.

Die Wärmebehandlung kann in verschiedenen Gasatmosphären durchgeführt werden, z.B. in Luft, Sauerstoff, Stickstoff, Ammoniak, Chlor, Kohlenstofftetrachlorid oder entsprechenden Gasmischungen.

Die thermische Verdichtung in Luft eignet sich vorzugsweise für dünnere SiO₂-Folien mit einer Dicke bis zu 50 µm. Bei 1000°C bilden sich hierbei dünne transparente Glasfolien. Die Sinterung in Stickstoff bei 1000 bis 1250°C ergibt schwarze Glasfolien mit eingeschlossenen Kohlenstoffpartikeln, die hohe Festigkeit aufweisen und z.B. als Substrate oder für Laminate geeignet sind. Durch Sintern in Ammoniak können überraschenderweise auch dickere Glasfolien von ausgezeichneter Transparenz hergestellt werden.

Die erfindungsgemäßen SiO₂-Folien zeigen keine Tendenz zu Rißbildung, ungewolltem Ablösen oder Einrollen. Ferner wurde überraschenderweise festgestellt, daß die eingesetzten organischen Komponenten problemlos ohne Rißbildung thermisch entfernt werden können, so daß farblos-transparente Glasfolien herstellbar sind, deren Abmessungen lediglich durch die Größe der Unterlage beschränkt sind.

Die erfindungsgemäßen SiO₂-Folien eignen sich für die verschiedensten Anwendungszwecke, z.B. als Membranen, Filter, Bestandteile von Laminaten oder Trägermaterialen mit inkorporierten funktionellen Zusatzstoffen, wie magnetischen Partikeln, Kohlenstoff, Metallkolloiden, Farbstoffen (auch photochrom) und Pigmenten. Weitere Anwendungsbereiche sind optische und elektronische Bauteile sowie Multilayermaterialien für kugelsichere Verglasungen.

Die folgenden Beispiele erläutern die Erfindung.

### Beispiel 1

Eine Mischung aus 0,92 Mol MTEOS, 0,08 Mol TEOS und 0,25 Mol kolloidalem SiO₂ (MA-ST von Nissan Chemicals; 30% in Methanol) wird mit 4,5 Mol absolutem Ethanol verdünnt und mit 4 Mol Ammoniakwasser (0,34 g 25% Ammoniaklösung in 72 g Wasser) unter Rühren mit einem Magnetrührer hydrolysiert.

Das Rührer wird weitere 3 min fortgesetzt. Durch 4tägiges Altern der Reaktionsmischung bei 80°C in einem geschlossenen Behälter wird ein viskoses Sol mit einer Viskosität von 20-25 Pas erhalten.

Das Sol wird direkt auf flache Polystyrolformen gegossen oder aufgerakelt, wobei Ziehgeschwindigkeiten von 5 bis 20 mm/s angewandt werden. Hierauf bedeckt man die Polystyrolform und hält sie 15 h in einem Ofen bei Temperaturen von 40 bis 65°C. In dieser Zeit geliert das viskose Sol und es kann eine riß- und verwerfungsfreie Gelfolie entnommen werden, die 3 h bei 20-30°C und anschließend 15 h bei 50°C getrocknet wird.

Die auf diese Weise hergestellten Gelfolienkönnen unabhängig von ihrer Dicke in Luft bei Temperaturen bis zu 400°C gesintert werden, wobei transparente Glasfolien entstehen. Gelfolien mit einer Dicke unter 50 µm können ohne Rißbildung in Luft bis zu 1000°C zu transparenten Glasfolien gesintert werden.

Bei der Sinterung dickerer Folien in Stickstoff im Bereich von 400 bis 1250°C entstehen mechanisch und thermisch stabile schwarze Glasfolien, die beim anschließenden Erhitzen auf 1300°C keine sichtbare Veränderung zeigen. Die thermomechanischen Eigenschaften entsprechen in etwa denen von reinem Kieselglas.

Bei Sinterung in einer Ammoniakatmosphäre bei Temperaturen bis 1000°C werden auch mit dickeren Gelfolien rißfreie Glasfolien von ausgezeichneter Transparenz erhalten. Die in Ammoniak gesinteren SiO₂-Folien weisen bessere chemische und thermische Stabilität und höhere Bruchfestigkeit, Mikrohärte und Hochtemperaturbeständigkeit auf als reine Kieselgläser.

### Beispiel 2

Zur Herstellung von photochromen Glasfolien wird eine 1 x 10⁻³ molare Lösung eines photochromen Spiropyran-Farbstoffs in Methanol hergestellt und 1 ml dieser Lösung zu 10 ml des wie in Beispiel 1 hergestellten Sols getropft, das einen Feststoffgehalt von nahezu 30 Massen-% aufweist. Die weitere Verarbeitung erfolgt wie in Beispiel 1.

### Beispiel 3

Zur Herstellung von magnetischen Glasfolien werden 2,5 ml einer Suspension von nanoskaligen Maghämit-Teilchen mit einer primären Teilchengröße von 10 nm und einem Feststoffgehalt von 6 Massen-% zu dem wie in Beispiel 1 hergestellten Sol getropft. Die weitere Verarbeitung erfolgt wie in Beispiel 1, wobei bei der Sinterung in Luft transparente rotbraun gefärbte magnetische Glasfolien erhalten werden.

## Patentansprüche

1. Verfahren zur Herstellung dünner SiO₂-Folien, dadurch gekennzeichnet, daß man
a) 40 bis 100 Masse-% eines oder mehrerer Silane der allgemeinen Formel (I)
Rₓ-Si-A₄₋ₓ (I)
worin die Reste A gleich oder verschieden sind und Hydroxylgruppen oder hydrolytisch abspaltbare Gruppen darstellen, die Reste R gleich oder verschieden sind und hydrolytisch nicht abspaltbare Gruppen darstellen und x den Wert 0, 1, 2 oder 3 hat, wobei bei mindestens 70 Stoffmengen-% der Silane x ≥ 1 ist; gegebenenfalls in Gegenwart von
b) 0 bis 50 Masse-% kolloidalem SiO₂ und/oder
c) 0 bis 10 Masse-% eines organischen Bindemittels
hydrolysiert und kondensiert, das erhaltene viskose Sol zu einer Gelfolie verarbeitet und die Gelfolie wärmebehandelt.

2. Verfahren nach Anspruch 1, dadurch gekennzeichnet, daß man die Hydrolyse und Kondensation in Gegenwart von sauren oder basischen, vorzugsweise basischen Kondensationskatalysatoren durchführt.

3. Verfahren nach Anspruch 1 oder 2, dadurch gekennzeichnet, daß man das Hydrolysat/Kondensat durch mehrstündiges bis mehrtägiges Altern bei Temperaturen von 40 bis 120°C in ein viskoses Sol überführt.

4. Verfahren nach einem der Ansprüche 1 bis 3, dadurch gekennzeichnet, daß man das Sol auf einer nicht-haftenden Unterlage zu einer Gelfolie verarbeitet.

5. Verfahren nach einem der Ansprüche 1 bis 4, dadurch gekennzeichnet, daß man die Gelfolie trocknet und bei Temperaturen bis 1400°C wärmebehandelt.

6. Dünne SiO₂-Folien, herstellbar nach dem Verfahren eines der Ansprüche 1 bis 5.

7. Dünne SiO₂-Folien nach Anspruch 6 mit einer Dicke von 2,5 bis 250 µm und einer Fläche von mindestens 25 cm².

8. Verwendung der SiO₂-Folien nach Anspruch 6 oder 7 als Membranen, Filter, Bestandteile von Laminaten oder Trägermaterialen mit inkorporierten funktionellen Zusatzstoffen.

## Claims

1. Process for the production of thin SiO₂ films, characterized in that
a) 40 to 100% by weight of one or more silanes of the general formula (I)
Rₓ-Si-A₄₋ₓ (I)
in which the radicals A are identical or different and are hydroxyl groups or groups which can be split off by hydrolysis, the radicals R are identical or different and are groups which cannot be split off by hydrolysis and x has the value 0, 1, 2 or 3, where, in at least 70 mol% of the silanes, x ≥ 1; if appropriate in the presence of
b) 0 to 50% by weight of colloidal SiO₂ and/or
c) 0 to 10% by weight of an organic binder,
is hydrolysed and subjected to condensation, the resulting viscous sol is processed to a gel film and the gel film is heat-treated.

2. Process according to Claim 1, characterized in that the hydrolysis and condensation are carried out in the presence of acid or basic, preferably basic, condensation catalysts.

3. Process according to Claim 1 or 2, characterized in that the hydrolysate/condensate is converted into a viscous sol by ageing at temperatures of 40 to 120°C for several hours to several days.

4. Process according to one of Claims 1 to 3, characterized in that the sol is processed onto a gel film on a non-sticky substrate.

5. Process according to one of Claims 1 to 4, characterized in that the gel film is dried and heat-treated at temperatures of up to 1400°C.

6. Thin SiO₂ films which can be produced by the process of one of Claims 1 to 5.

7. Thin SiO₂ films according to Claim 6 having a thickness of 2.5 to 250 µm and an area of at least 25 cm².

8. Use of the SiO₂ films according to Claim 6 or 7 as membranes, filters, constituents of laminates or carrier materials with incorporated functional additives.

## Revendications

1. Procédé de préparation de feuilles minces de SiO₂, caractérisé en ce que l'on hydrolyse et condense
a) 40 à 100 % en masse d'un ou plusieurs silanes de formule générale (I) :
Rₓ-Si-A₄₋ₓ (I)
dans laquelle les restes A sont identiques ou différents et représentent des groupes hydroxyle ou des groupes séparables par hydrolyse, les restes R sont identiques ou différents et représentent des groupes non séparables par hydrolyse, et x a la valeur 0, 1, 2 ou 3, x étant ≥ 1 pour au moins 70 % de la quantité des silanes, éventuellement en présence de
b) 0 à 50 % en masse de SiO₂ colloïdal et/ou
c) 0 à 10 % en masse d'un liant organique,
on transforme le sol visqueux obtenu en une feuille de gel et on soumet la feuille de gel à un traitement thermique.

2. Procédé selon la revendication 1, caractérisé en ce que l'on réalise l'hydrolyse et la condensation en présence de catalyseur de condensation acide ou basique, de préférence en présence de catalyseurs de condensation basiques.

3. Procédé selon la revendication 1 ou 2, caractérisé en ce que l'on transforme l'hydrolysat/condensat en un sol visqueux par vieillissement pendant plusieurs heures à plusieurs jours à une température de 40 à 120 °C.

4. Procédé selon l'une quelconque des revendications 1 à 3, caractérisé en ce que l'on transforme le sol en une feuille de gel sur un support non adhérent.

5. Procédé selon l'une quelconque des revendications 1 à 4, caractérisé en ce que l'on sèche la feuille de gel et la soumet à un traitement thermique, à une température allant jusqu'à 1400 °C.

6. Feuille mince de SiO₂, que l'on peut obtenir par le procédé selon l'une quelconque des revendications 1 à 5.

7. Feuille mince de SiO₂ selon la revendication 6, ayant une épaisseur de 2,5 à 250 µm et une surface d'au moins 25 cm2.

8. Utilisation des feuilles de SiO₂ selon la revendication 6 ou 7 comme membranes, filtres, éléments de stratifiés ou supports auxquels sont incorporés des additifs remplissant une fonction.
